# EUROPEAN PATENT SPECIFICATION

(11) **EP 2 223 468 B1**
(45) Date of publication and mention of the grant of the patent: **16.08.2017**
(21) Application number: 08859809.9
(22) Date of filing: 10.12.2008
(51) Int. Cl.: H04W 84/18, H04L 12/24, H04W 16/14, H04W 48/12

(54) **MANAGING MULTIPLE CHANNELS IN SINGLE NETWORK AND NETWORK MANAGEMENT DEVICE**
VERWALTUNG MEHRERER KANÄLE IN EINEM EINZELNEN NETZ UND NETZVERWALTUNGSVORRICHTUNG
GESTION DE CANAUX MULTIPLES DANS UN RÉSEAU UNIQUE ET DISPOSITIF DE GESTION DE RÉSEAU

(30) Priority: 10.12.2007 US 12517 P; 25.11.2008 KR 20080117473
(43) Date of publication of application: 01.09.2010
(73) Proprietor: Electronics and Telecommunications Research Institute, Yusong-gu, Daejeon-city 305-350 (KR)
(72) Inventor: UM, Jung-Sun, Suwon-city Gyeonggi-do 443-370 (KR); KO, Gwangzeen, Seoul 136-073 (KR); KIM, Chang-Joo, Daejeon-city 305-761 (KR); SONG, Myung-Sun, Daejeon-city 305-755 (KR); HWANG, Sung-Hyun, Daejeon-city 305-755 (KR); YOU, Sung-Jin, Daejeon-city 300-766 (KR)
(74) Representative: Betten & Resch
(86) International application number: PCT/KR2008/007295
(87) International publication number: WO 2009/075517

(56) References cited:
- US-A1- 2003 171 116
- US-A1- 2007 253 345
- US-B2- 7 120 138
- US-B2- 7 231 215
- TAO CHEN ET AL: "CogMesh: A Cluster-Based Cognitive Radio Network", 2007 2ND IEEE INTERNATIONAL SYMPOSIUM ON NEW FRONTIERS IN DYNAMIC SPECTRUM ACCESS NETWORKS : [DYSPAN 2007] ; DUBLIN, IRELAND, 17 - 20 APRIL 2007, IEEE, US, 1 April 2007 (2007-04-01), pages 168-178, XP031095616, ISBN: 978-1-4244-0663-0
- CHEN T ET AL: "Topology Management in CogMesh: A Cluster-Based Cognitive Radio Mesh Network", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 6516-6521, XP031126711, ISBN: 978-1-4244-0353-0

## Description

### Technical Field

The present invention relates to a method of managing multiple channels in a single network and a network management device, and more particularly, to a method of managing multiple channels in a single network and a network management device, wherein when a single network operates on multiple channels, all devices in the single network share important data required by a system operation, and are controlled by a device that controls the entire single network.

The present invention is supported by the Information Technology (IT) Research & Development (R&D) program of the Ministry of Information and Communication (MIC) and the Institute for Information Technology Advancement (IITA) [2005-S-002-03, Development of Cognitive Radio Technology for Efficient Spectrum Utilization].

### Background Art

Recently, a cognitive radio (CR) technology has come into the spotlight as a technology for sharing wireless communication resources. According to the CR technology, a CR system senses a wireless band that is assigned to a certain user but is not used at a regular time and place, checks that the wireless band is not being currently used, and uses a corresponding channel of the wireless band for wireless communication. In this case, the CR system selects the optimum channel in such a way that interference with the certain user is minimized, and when the certain user wishes to use the wireless band, devices in a CR network are controlled so that the devices transfer to another channel while maintaining quality of service (QoS).

TAO CHEN ET AL, "CogMesh: A Cluster-Based Cognitive Radio Network", 2007 2ND IEEE INTERNATIONAL SYMPOSIUM ON NEW FRONTIERS IN DYNAMIC SPECTRUM ACCESS NETWORKS : [DYSPAN 2007] ; DUBLIN, IRELAND, 17 - 20 APRIL 2007, IEEE, US, (20070401), relates to techniques for neighbor discovery, cluster formation, network formation, and network topology management.

CHEN T ET AL, "Topology Management in CogMesh: A Cluster-Based Cognitive Radio Mesh Network", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, (20070601), relates to a topology management algorithm to optimize the cluster configuration with regard to the network topology.

US 2007/253345 A1 relates to a method of connecting a new device to an existing network. The method of connecting to an existing centralized radio network (piconet) which comprises a master device such as a network coordinator (PNC) and at least one further device in the transmission range (Tx) of the network coordinator (PNC) and at least one new device not being in the transmission range (Tx) of the network coordinator (PNC), comprises the steps of the new device becoming a temporary network coordinator (tempPNC) which broadcasts a beacon with an initiation request such as a PNC request IE in the beacon indicating that it intends to associate to an existing network (piconet); those devices that became a child network coordinator (CPNC) signalling a response to the initiation beacon in form of one or several broadcast or unicast frames indicating that they are available child piconet coordinators (CPNCs); the new device that acts as a temporary network coordinator (tempPNC) scanning the channels or frequencies, receiving the response signals and choosing at least one of the available child network coordinators (CPNCs) as master; acknowledging at least one of the selected child network coordinators' response signals and finishing the role of a temporary network coordinator (tempPNC) and instead becoming a slave with regard to the chosen child network coordinator (CPNC) that works as a coordinator.

### Disclosure of Invention

### Technical Problem

In the CR system, when a primary user wishes to use its wireless band, devices in the CR network are controlled so that the devices transfer to another channel while maintaining quality of service (QoS).

### Technical Solution

The present invention is defined in the independent claims. The dependent claims define embodiments.

An example provides a method of managing multiple channels in a single network and a network management device, wherein when a single network operates on multiple channels, all devices in the single network share important data required by a system operation, and are controlled by a device that controls the entire single network. Specifically, by applying the method and the network management device to a cognitive radio (CR) system, devices operating on a new channel perform different functions, and thus resource utilization efficiency is increased.

Another example provides a method of managing multiple channels in a single network and a network management device, wherein a wireless channel, which is additionally assigned, aside from a master channel that is operated by a master network management system (NMS), i.e. a branch channel, uses a branch device and a branch beacon, thus a single network using multiple channels is controlled.

### Advantageous Effects

According to the present invention, all devices in a single network operating by using multiple channels can share core information, and be effectively controlled by a network management device (also referred to as NMS).

Also, devices operating on a channel other than a master channel operate differently for a predetermined time, and thus resource utility efficiency is increased.

### Description of Drawings

The above and other features and advantages of the present invention will become more apparent by describing in detail exemplary embodiments thereof with reference to the attached drawings in which:
FIG. 1 is a diagram for describing a method of managing multiple channels in a single network, wherein the method is performed by one network management system (NMS) device, according to an embodiment of the present invention;
FIG. 2 is a diagram for describing a method of managing multiple channels in a single network, wherein the method is performed by multiple NMS devices, according to an embodiment of the present invention;
FIG. 3 is a diagram for describing a hybrid method of managing multiple channels, wherein the methods of FIGS. 1 and 2 are combined, according to an embodiment of the present invention;
FIG. 4 is a diagram for describing a method of managing multiple channels in a centralized network, when a single NMS device operates for two channels, according to an embodiment of the present invention;
FIG. 5 is a diagram for describing a method of managing multiple channels in a centralized network, when multiple NMS devices operate for two channels, according to an embodiment of the present invention;
FIG. 6 is a diagram illustrating operational procedures of multiple NMS devices in a distributed network, according to an embodiment of the present invention;
FIG. 7 is a flowchart illustrating a method of managing multiple channels in a single network, wherein the method is performed by a network management device, according to an embodiment of the present invention;
FIG. 8 is a flowchart illustrating a method of managing multiple channels in a single network, wherein the method is performed by a network device, according to an embodiment of the present invention; and
FIG. 9 is a block diagram illustrating elements of devices forming a single network system, according to an embodiment of the present invention.

### Best Mode

According to an aspect, there is provided a method of managing multiple channels in a single network, the method performed by a network management device and including: determining a new channel and at least one device to be operated on the new channel; transmitting a branch beacon for the control/ management of new channel, after switching an operating channel from a master channel to the new channel; receiving channel information from devices on the new channel that received the branch beacon.

According to another aspect, there is provided a method of managing multiple channels in a single network, the method performed by a network management device and including: determining a new channel, at least one device to be operated on the new channel, and a new channel managing device; and receiving new channel information from the new channel managing device, which received a master beacon transmitted on a master channel, after switching an operating channel from the new channel to the master channel.

According to another aspect, there is provided a method of managing multiple channels in a single network, the method performed by a network device and including: receiving a master beacon transmitted on a master channel that is managed by a network management device and transmitting new channel information after switching an operating channel from a new channel to the master channel, according to an authority to manage the new channel granted by the network management device; and transmitting a branch beacon for the new channel control/ management on the new channel and receiving channel information from at least one device on the new channel, after switching an operating channel from the master channel to the new channel.

According to another aspect, there is provided a method of managing multiple channels in a single network, the method performed by a network device and including: sensing a new channel assigned by a network management device or communicating with the other devices on the new channel, while a new channel managing device communicates on a master channel managed by the network management device after switching an operating channel to the master channel; and receiving a branch beacon for control/management on the new channel and transmitting channel information, wherein the branch beacon is generated based on a master beacon received on the master channel by the new channel managing device after switching the operating channel from the master channel to the new channel.

According to another aspect, there is provided a method of managing multiple channels in a single network, the method performed by a network management device and including: determining a new channel and at least one device to be operated on the new channel; and determining direct management of the new channel according to statuses of a pre-communicating master channel and the new channel.

According to another aspect, there is provided a method of managing multiple channels in a single network, the method including: receiving new channel information from devices on a new channel; receiving a master beacon transmitted on a master channel, after switching an operating channel from the new channel on the master channel; and generating a branch beacon to be transmitted to the new channel based on the new channel information and the master beacon.

According to another aspect, there is provided a method of managing multiple channels in a distributed network, the method including: r eceiving a beacon that is distributed and transmitted by at least one device operating on a master channel, and transmitting a beacon after switching an operating channel from a new channel to a master channel; transmitting a branch beacon generated based on the received beacon, and receiving a beacon that is distributed and transmitted by at least one device on the new channel after switching the operating channel from the master channel to the new channel; and communicating with the at least one device based on the branch beacon and the beacon that is distributed and transmitted by the at least one device.

According to another aspect, there is provided a network management device for managing multiple channels in a single network, the network management device including: channel managing unit which determines a new channel and at least one device to be operated on the new channel; and a management mode determining unit which determines a direct management mode of the new channel according to statuses of a pre-communicating master channel and the new channel.

According to another aspect, there is provided a network device for managing multiple channels in a single network, the network device including: a channel switching unit which determines a point of time when an operating channel is switched from a master channel that is managed by a network management device to a new channel according to an authority to manage the new channel granted by the network management device; and an information processing unit which manages a master beacon received on the master channel and new channel information to be transmitted on the master channel by switching the operating channel from the new channel to the master channel, and manages a branch beacon for new channel control/management, which is to be transmitted, and channel information received from devices on the new channel, by switching the operating channel from the master channel to the new channel.

According to another aspect, there is provided a network device for managing multiple channels in a single network, the network device including: a channel sensing unit which senses a new channel assigned by a network management device while a new channel managing device communicates on a master channel managed by the network management device after switching an operating channel to the master channel; and an information processing unit which manages a branch beacon for new channel control/management and channel information to be transmitted to the new channel managing device, wherein the branch beacon is generated by the new channel managing device that switched the operating channel from the master channel to the new channel based on a master beacon received on the master channel.

According to another aspect, there is provided a computer readable recording medium having recorded thereon a program for executing the method above.

### Mode for Invention

Hereinafter, the present invention will be described more fully with reference to the accompanying drawings, in which exemplary embodiments of the invention are shown. In the drawings, like reference numerals denote like elements. Also, while describing the present invention, detailed descriptions about related well-known functions or configurations that may diminish the clarity of the points of the present invention are omitted.

When a part 'includes' an element, it means the part may include another element unless otherwise stated. Terms such as 'unit', 'module', and 'block' mean a unit that performs at least one function or operation, which may be realized by hardware, software, or a combination of hardware and software.

For devices forming one network in a wireless communication system to communicate with each other, assigned wireless channel resources may be classified and shared in time, frequency, space, or code. Such wireless channel resources may be classified and assigned by a base station or an access point (AP), or may be distributed via an agreement between the devices. In the current specification, a function of controlling a network will be referred to as a network management system (NMS) function for convenience. When a network operates on a single channel, a device performing an NMS function assigns appropriate channel resources to each device in the network according to service requirement conditions, and controls operations of each device. However, when a single network operates on multiple channels due to an entire channel capacity requiring more than one channel, a device for performing an NMS function must be able to control each device operating in the multiple channels and resources of a corresponding channel. In the present invention a method of controlling each device is suggested, wherein the method is performed by a system that manages the entire network and shares information between each device, when available resources in a system that temporarily distributes resources are insufficient to what is required, and thus an additional channel is used aside from a channel that is currently being used. Specifically in a cognitive radio (CR) system, when a primary user of a channel that is being currently operated appears and thus devices in the entire network move to the other channel, information required for a CR function, such as a location of the other channel to urgently move or a quiet period for detecting the primary user, must be shared with the devices even when the devices are operating in different channels, and the operations of the devices must be controlled by a network management system (NMS)

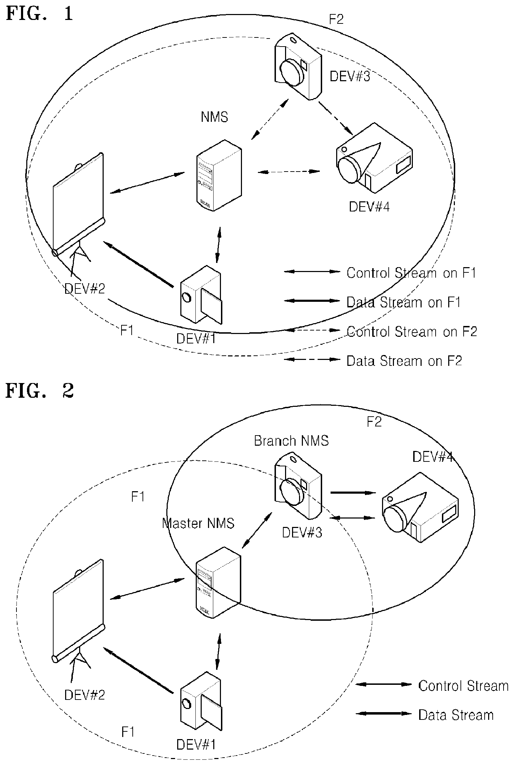

FIG. 1 is a diagram for describing a method of managing multiple channels in a single network, wherein the method is performed by one NMS device, according to an embodiment of the present invention.

Referring to FIG. 1, the NMS device that performs an NMS function shares information with in the single network and controls devices therein, while moving frequencies (for example, channels F1 and F2) of the devices. In this case, a simple protocol may be designed.

When a new device DEV#3 is added while devices DEV#1 and DEV#2 are operating in the channel F1, the NMS device that is managing the channel F1 controls the device DEV#3 to operate in the new channel F2 when resources of the channel F1 are insufficient.

FIG. 2 is a diagram for describing a method of managing multiple channels in a single network, wherein the method is performed by multiple NMS devices, according to an embodiment of the present invention.

According to the method of FIG. 2, one of devices that are to be operated in a new channel added due to an increase in required resources performs an NMS function, and communicates and exchanges information with an NMS device in a master channel.

Referring to FIG. 2, a master NMS (MNMS) denotes a device that performs an NMS function in a master channel F1, and a branch NMS (BNMS) denotes a device that performs an NMS function in a branch channel F2. The MNMS may distribute communication resources by considering data transmission requirement conditions of devices operating in the master channel F1 and the branch channel F2, and may quickly gather sensing information by controlling channel sensing functions of the devices operating in the master channel F1 and the branch channel F2. The BNMS may periodically communicate with the MNMS to receive commands from the MNMS, or may transmit important information generated in the branch channel F2 to the MNMS. Accordingly, a load on the MNMS is decreased.

When new devices DEV#3 and DEV#4 are added while devices DEV#1 and DEV#2 are operating in the master channel F1, the MNMS determines a status of the master channel F1 upon request of the devices DEV#3 and DEV#4 or by itself, assigns the new branch channel F2 to the devices DEV#3 and DEV#4, and selects the BNMS from among the devices DEV#3 and DEV#4. In FIG. 2, the device DEV#3 is the BNMS and it communicates with the MNMS, and the device DEV#4 performs communication under control of a branch beacon transmitted by the BNMS. The device DEV#4 may perform channel sensing while the BNMS communicates with the MNNS, and when another device exists aside from the device DEV#4, the device DEV#4 may communicate with the other device. Resources of the branch channel F2 may be distributed by the BNMS.

When a new device joins a network in a CR system which is called as association, entire management is performed by an MNMS, and information for association is obtained via a beacon signal transmitted by the MNMS (Master Beacon). However according to the present invention, a new device may associate with a network by using information from a branch beacon of the branch channel F2, when the new device is unable to receive a beacon of the MNMS transmitted on the master channel F1 but is able to receive the branch beacon of the branch channel F2, or searches for a beacon of the BNMS (Branch Beacon) transmitted on the branch channel F2 before searching for a beacon of the master channel F1.

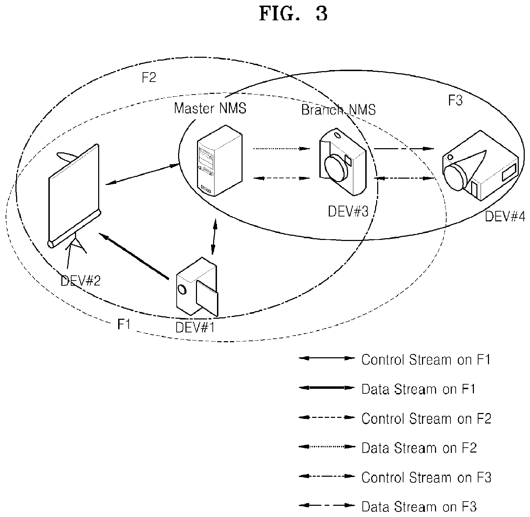

FIG. 3 is a diagram for describing a hybrid method of managing multiple channels, wherein the methods of FIGS. 1 and 2 are combined, according to an embodiment of the present invention.

In FIG. 3, a MNMS directly controls channels F1 and F2, and a device DEV#3 operates in a channel F3 after becoming a BNMS.

The MNMS that manages the channel F1 (or the channel F2), in which a device DEV#1 operates, as a main channel, directly controls the channel F2 (or the channel F1) assigned to a device DEV#2, and allows the device DEV#3 selected as the BNMS to control the channel F3 assigned to the devices DEV#3 and DEV#4.

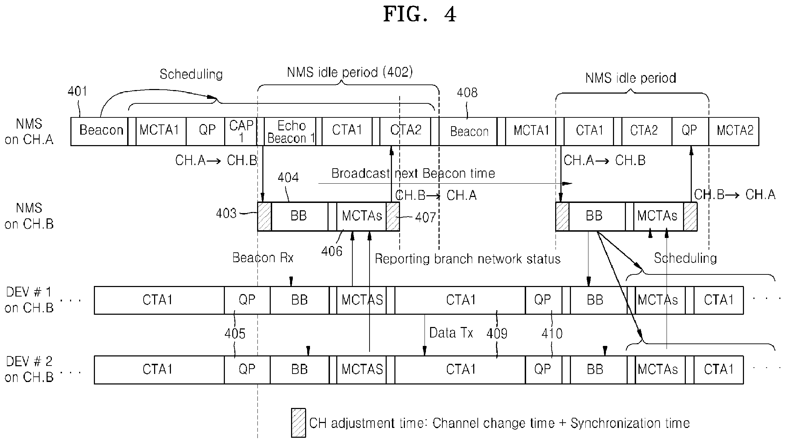

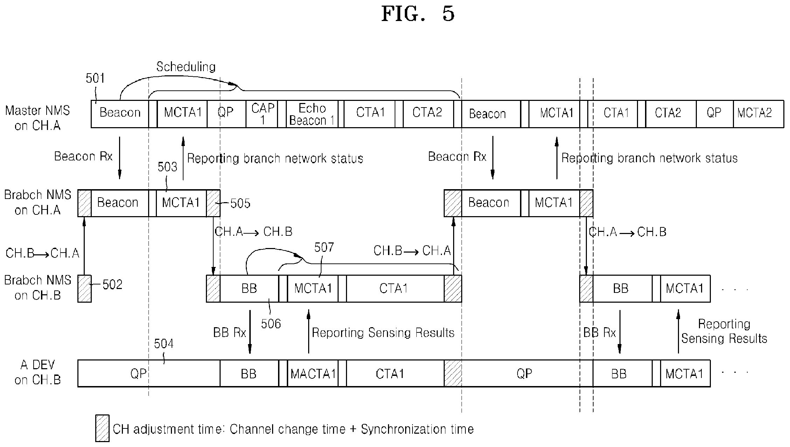

FIG. 4 is a diagram for describing a method of managing multiple channels in a centralized network, when a single NMS device operates in two channels, according to an embodiment of the present invention. FIG. 5 is a diagram for describing a method of managing multiple channels in a centralized network, when multiple NMS devices operate in two channels, according to an embodiment of the present invention.

In a network controlled by an NMS device that performs an NMS function, the NMS device uses beacon information so as to distribute resources of a corresponding channel and transmit control/management information to another device. Each device distributes and uses resources via the beacon information, and in the case of a CR system, information about a location of a quiet period (QP) and information required for a CR function are obtained via the beacon information.

In FIGS. 4 and 5, management channel time allocation (MCTA) denotes a time domain wherein devices other than the NMS device exchange management information. The QP denotes a time domain wherein CR devices sense a channel after stopping communication so as to detect whether a primary user accesses the channel that is currently being operated. A contention access period (CAP) denotes a time domain wherein the devices other than the NMS device compete to transmit data, and channel time allocation (CTA) denotes a time domain assigned for a certain device to transmit a signal. An echo beacon is a signal re-transmitted by a device in a cell to another device, which is located outside a transmission range of a master beacon and to be newly associated with the cell, so that the other device receives beacon information and associates with the cell, since a beacon signal of the MNMS may not be demodulated outside a certain range.

Referring to FIG. 4, the single NMS directly controls both channels A and B, while controlling a time slot.

The single NMS transmits a beacon signal 401 including the control/management information on the channel A, and moves to the channel B during a channel adjustment time 403 from an NMS idle period 402, where the single NMS does not directly communicate with another device. Here, a channel adjustment time includes a channel change time and a synchronization time. A next a beacon transmission time is broadcasted via a beacon signal.

The single NMS that moved to the channel B performs an NMS function on the channel B, transmits a branch beacon (BB) 404, and exchanges control/management information with devices DEV#1 and DEV#2 operating on the channel B that received branch beacon 404. The devices DEV#1 and DEV#2 receive the branch beacon after channel sensing 405, and reports a status of a branch network to the single NMS during MCTA 406. The single NMS moves back to the channel A during a channel adjustment time 407, and then transmits a beacon 408. The devices DEV#1 and DEV#2 transmit/receive data during corresponding CTA 409, and when the transmitting/ receiving of data is completed, the devices DEV#1 and DEV#2 senses a channel during QP 410.

In FIG. 4, the single NMS manages all resources, and thus a protocol is simple, but the single NMS may be overloaded, and its operation may be restricted according to the form of information to be transmitted.

Referring to FIG. 5, when the multi-NMS is used, an NMS that controls a new channel is referred to as a branch NMS.

A master NMS of a channel A transmits a master beacon 501 including the control/ management information. A branch NMS, which operates in a channel B as a branch channel, is aware of a point of time when the master beacon is transmitted, from information contained in a previous beacon, and thus receives the master beacon by moving from the channel A to the channel B during a channel adjustment time 502 at a corresponding point of time. The branch NMS transmits information about a branch network of the channel B to the master NMS during MCTA 503, and thus the master NMS and the branch NMS may exchange control/management information. Specifically, in the case of CR system, the master NMS and the branch NMS additionally share the information of the channel B related to the CR function, like channel sensing information. However, sometimes, a point of receiving a beacon of the master NMS is not required to be every time of transmitting the beacon. While the branch NMS and the master NMS communicate with each other, a device DEV A on the channel B may sense the channel B during QP 504. When another device exists on the channel B and the other device communicates with the device DEV A, the other device and the device DEV A may exchange data. In other words, resources are efficiently used. After communicating with the master NMS on the channel A, the branch NMS moves back to the channel B during a channel adjustment time 505 so as to transmit information simplified by using information received from the master NMS in the form of a branch beacon (BB) 506. The device DEV A in the channel B receives the branch beacon 506, and transmits the channel information, which is related the utilization of channel resource or the CR function including channel sensing results, during MCTA 507 to the branch NMS. Accordingly, devices including the master NMS in different channels in a network share statuses of channels.

The following are examples of types of information that may be included in a branch beacon for controlling and managing a branch channel.
- A channel number of a channel that a master NMS operates
- A point of time that a master beacon is transmitted
- Essential information related to a CR function, such as a group of available channels to move when a primary user suddenly appears on the channel (the master channel or the branch channel) which CR system is currently operating.
- Resource distribution information of a branch channel

Processes of establishing a branch channel and a branch NMS will now be described.

When some devices operating on a master channel are to be operated on a new channel due to resources of the master channel being insufficient (this is determined by an NMS or a corresponding device), the new channel and at least one device to be operated on the new channel in a following frame are determined according to a request of the corresponding device or a command of the NMS. At this time, a device to operate as a branch NMS on the new channel is also determined. A device may be selected as the branch NMS according to a standard, such as a device nearest to the master NMS or a device that is able to use NMS capability information, but is not limited thereto.

The at least one device to be operated on the new channel moves to the new channel so as to form a branch network.

When the branch NMS transmits a branch beacon, each device starts data transmission.

The branch NMS moves back to a master channel at a point of receiving a following beacon of the master NMS, and other devices in the branch network performs mutual communication or channel sensing.

After communicating with the master NMS, the branch NMS moves back to the new channel and transmits a branch beacon.

By using the multiple NMS devices, the master NMS manages all channels despite the number of new channels, and thus a load on the master NMS is reduced. Also, the multiple NMS devices may be applied not only to the centralized network, but also to a distributed network.

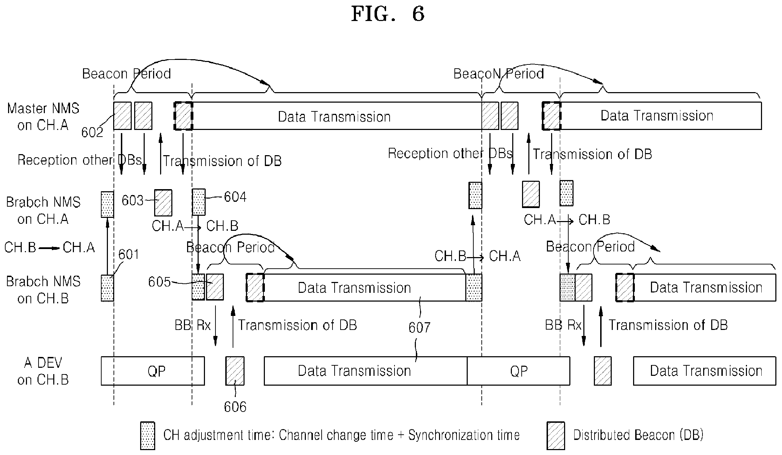

FIG. 6 is a diagram illustrating operational procedures of multiple NMS devices in a distributed network, according to an embodiment of the present invention.

Referring to FIG. 6, a branch NMS of a channel B is aware of points of time when beacons of devices are transmitted on a channel A from information contained in a previous beacon, and thus the branch NMS switches an operating channel from the channel B to the channel A during a channel adjustment time 601 of a point of time to be transmitted on the channel A, receives a distributed beacon (DB) 602 from the devices on the channel A, and then transmits its own distributed beacon 603. During a channel adjustment time 604, the branch NMS switches the operating channel from the channel A to the channel B, and transmits a branch beacon (BB) 605 to devices, including a device DEV A, on the channel B based on information of the distributed beacons received from the devices on the channel A. The device DEV A on the channel B, which senses the channel B during QP 606 while the branch NMS communicates with the devices on the channel A, receives a branch beacon 605, and transmits its own distributed beacon 606 to the branch NMS. The branch NMS and each device, including the device DEV A, on the channel B transmit/receive data during a data transmission period 607 according to a beacon signal.

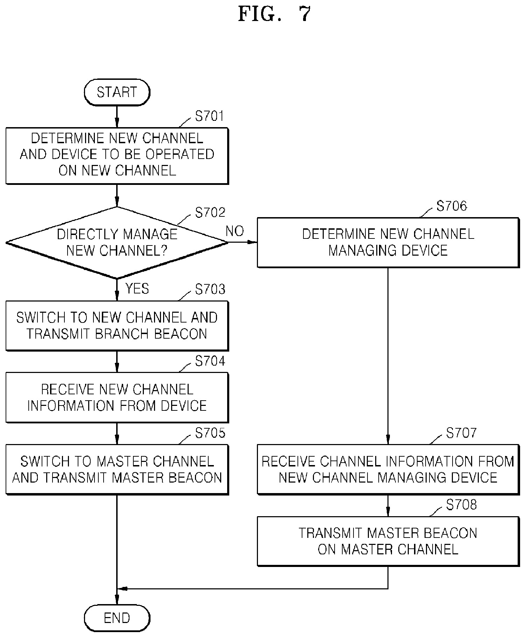

FIG. 7 is a flowchart illustrating a method of managing multiple channels in a single network, wherein the method is performed by a network management device (or a network management system), according to an embodiment of the present invention. Detailed descriptions that overlap with the above will be omitted.

Hereinafter, a channel managed by a network management device is called a master channel. The network management device performs control and management of the master channel by transmitting a master beacon to the master channel.

In operation S701, a new channel and at least one device to be operated on a new channel (or a branch channel) are determined according to a request of a device on the master channel or a status of the master channel.

In operation S702, it is determined whether the new channel is to be directly managed. Operation 702 may be determined according to various conditions, such as determination of an operator according to a system environment and performance of the network management device.

In the case of a direct management mode, the network management device switches an operating channel from the master channel to the new channel, generates a branch beacon for the control and management of the new channel, and transmits the branch beacon to the new channel in operation S703. The network management device performs such channel switching in a time period where the network management device does not communicate with another device on the master channel. The branch beacon may include at least one of a channel number of the master channel, a point of time when a beacon is transmitted on the master channel, a group of channels to be switched when a primary user of the master channel or branch channel suddenly appears on the channel which CR system is currently operating, and resource distribution information of the new channel.

In operation S704, sensing information of the new channel is received from other devices on the new channel that received the branch beacon. Accordingly, channel information is shared between devices on different channels in the single network.

Then in operation S705, the network management device switches the operating channel back to the master channel, and transmits the master beacon at a point of time when the master beacon is transmitted.

In an indirect management mode, the network management device does not perform channel switching. In operation S706, the network management device determines a new channel managing device from among devices to be operated on the new channel. The new channel managing device may be a device nearest to the network management device, and may be a device that is able to use capability information of the network management device.

In operation S707, new channel information is received from the new channel managing device that received the master beacon transmitted to the master channel, by switching the operating channel from the new channel to the master channel. Since the new channel managing device receives channel sensing information of the devices on the new channel, channel information is shared between the devices on different channels in the single network through the new channel managing device.

In operation S705, the network management device transmits the master beacon to the master channel at a point of time when a next master beacon is transmitted.

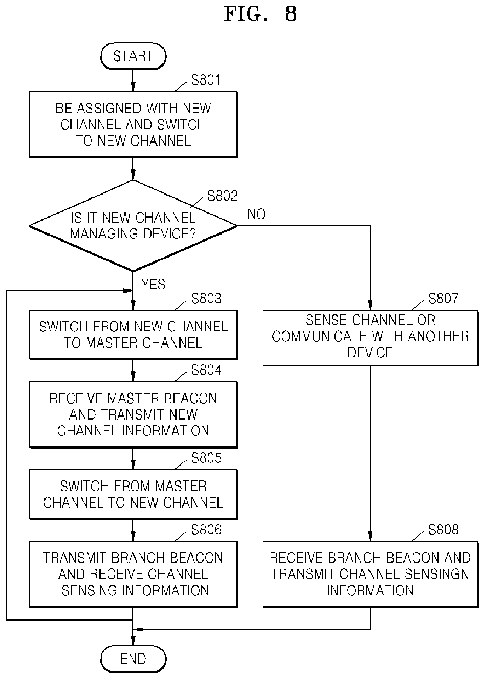

FIG. 8 is a flowchart illustrating a method of managing multiple channels in a single network, wherein the method is performed by a network device, according to an embodiment of the present invention. Detailed descriptions that overlap with the above will be omitted.

In operation S801, a network device that is operating on a master channel or that is newly added is assigned with a new channel by a network management device that manages the master channel, and switches an operating channel to the new channel. The assigning of the new channel may be determined according to a request of the network device or by the network management device according to a status of the master channel.

In operation S802, the network device forms a branch network on the new channel with other devices to operate on the new channel, and determines whether itself is selected as a new channel managing device.

The new channel managing deice that is given authority to manage the new channel switches the operating channel from the new channel to the master channel in operation S803, and receives a master beacon transmitted to the master channel and transmits new channel information to the network management device in operation S804. The switching to the master channel is performed at a point of time when the master beacon is transmitted.

The new channel managing device switches the operating channel from the master channel to the new channel in operation S805, and transmits a branch beacon for new channel control/management on the new channel and receives channel information from other devices on the new channel in operation S806. Since the branch beacon is generated based on the master beacon, channel information is shared between devices, including the network management device, on different channels in the single network, through the new channel managing device.

A device that is not selected to be the new channel managing device senses a channel or communicates with another device in operation S807, while the network management device and the new channel managing device communicate with each other on the master channel.

In operation S808, the branch beacon is received from the new channel managing device that switched the operating channel from the master channel to the new channel, and transmits channel information. Alternatively, when the network management device switched the operating channel from the master channel to the new channel, the branch beacon is received from the network management device and the channel information is transmitted.

The network management device, which manages the master channel, or the new channel managing device, which is selected from among devices operating on the new channel and manages the new channel, generates the branch beacon based on new channel information and the master beacon.

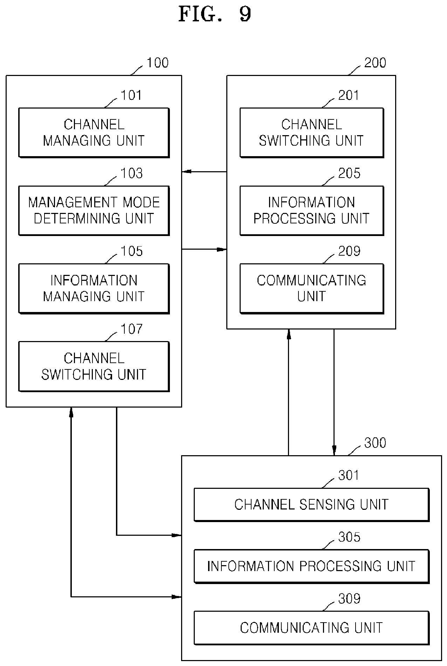

FIG. 9 is a block diagram illustrating elements of devices forming a single network system, according to an embodiment of the present invention. Detailed descriptions that overlap with the above will be omitted.

Referring to FIG. 9, the single network system includes a network managing device 100, at least one network device 300, and a branch network management device 200 selected from among the at least one network device 300.

The network management device 100 includes a channel managing unit 101, a management mode determining unit 103, an information managing unit 105, and a channel switching unit 107.

The channel managing unit 101 determines at least one device to be operated on a new channel from among devices operating on a master channel and/or new devices. Use of the new channel is determined according to a request of a corresponding device or a status of the master channel. Also, the channel managing unit 101 determines a new channel managing device from among the at least one device to be operated on the new channel.

The management mode determining unit 103 determines whether it directly manages the new channel according to a status of each channel.

In a direct management mode, the information managing unit 105 manages a branch beacon to be transmitted and channel information received from devices on the new channel that received the branch beacon, by switching an operating channel from the master channel to the new channel. In an indirect management mode, the information managing unit 105 receives new channel information that is transmitted by the new channel managing device determined by the channel managing unit 101, after the new channel managing device receives a master beacon transmitted on the master channel by switching the operating channel from the new channel to the master channel.

In the direct management mode, the channel switching unit 107 switches the operating channel between the master channel and the new channel.

The branch network management device 200 is a device that manages the new channel (or a branch channel) added to the master channel, and includes a channel switching unit 201, an information processing unit 205, and a communicating unit 209.

The channel switching unit 201 determines a point of time when the a channel switching is to be performed between the master channel and the new channel according to management authority of the new channel granted by the network management device 100, and switches between the master channel and the new channel when required.

The information processing unit 205 manages the master beacon received on the master channel by switching the operating channel from the new channel to the master channel and new channel information that is to be transmitted on the master channel, generates a branch beacon to be transmitted after switching the operating channel from the master channel to the new channel, and manages channel information received from the network device 300 on the new channel.

The communicating unit 209 exchanges channel information and data with the network management device 100 and the network device 300.

The network device 300 is a node operating on one of multiple channels in the single network, and includes a channel sensing unit 301, an information processing unit 305, and a communicating unit 309.

The channel sensing unit 301 senses the new channel while the branch network management device 200, which manages the new channel assigned by the network management device 100, communicates with the master channel after switching the operating channel to the master channel. Also, the channel sensing unit 301 senses the new channel before the network management device 100 transmits a branch beacon, after switching the operating channel from the master channel to the new channel.

The information processing unit 305 manages channel information and a branch beacon that is generated by the branch network management device 200 based on the master beacon received on the master channel. The information processing unit 305 manages channel information that is to be transmitted and the branch beacon that is transmitted by the network management device 100 after switching the operating channel from the master channel to the new channel.

The communicating unit 309 communicates with the network management device 100 and the network device 300 on a channel determined according to a status of a master channel or a request to change a channel.

In alternative embodiments, hard-wired circuitry may be used in place of or in combination with a process/controller programmed with computer software instructions to implement the invention. Thus, embodiments of the invention are not limited to any specific combination of hardware circuitry and software.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

The terms used in the present invention are for descriptive purposes only and are not intended to limit the meanings or the scope of the invention. Accordingly, while this invention has been particularly shown and described with reference to preferred embodiments thereof, it will be understood by those of ordinary skill in the art that various changes in form and details may be made therein without departing from the scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A method of managing multiple channels in a single network of a cognitive radio system, the method performed by a network management device managing a master channel and performing control and management of the master channel by transmitting a master beacon to the master channel, and comprising:
determining a new channel and at least one device to be operated on the new channel (S701);
determining whether to apply direct management for the new channel (S702);
in case of direct management,
switching an operating channel from the master channel to the new channel, generating a branch beacon for performing control and management of the new channel, and transmitting the branch beacon on the new channel (S703);
receiving channel information from devices on the new channel that received the branch beacon (S704); and
switching the operating channel back to the master channel, and transmitting the master beacon (S705);
in case of no direct management,
determining one of the at least one device to be operated on the new channel as a new channel managing device (S706); and
receiving new channel information from the new channel managing device that received the master beacon transmitted on the master channel after switching the operating channel from the new channel to the master channel (S707).

2. The method of claim 1, wherein the at least one device to be operated on the new channel is determined (S701) according to a request of the corresponding device to be operated on the new channel or a status of the master channel.

3. The method of claim 1, wherein the branch beacon comprises at least one of a channel number of the master channel, a point of time when a beacon is transmitted on the master channel, a group of channels to be switched when a primary user suddenly appears, and resource distribution information of the new channel.

4. A method of managing multiple channels in a single network of a cognitive radio system, the method performed by a network device and comprising:
assigning the network device with a new channel, and switching an operating channel to the new channel (S801);
forming a branch network on the new channel with other devices to operate on the new channel, and determining whether itself is selected as a new channel managing device (S802);
in case the network device is selected as the new channel managing device,
receiving a master beacon transmitted on a master channel that is managed by a network management device and transmitting new channel information (S804) after switching the operating channel from the new channel to the master channel (S803), according to an authority to manage the new channel granted by the network management device; and
transmitting a branch beacon for performing control and management of the new channel on the new channel and receiving channel information from at least one device on the new channel (S806) after switching the operating channel from the master channel to the new channel (S805);
in case the network device is not selected as the new channel managing device,
sensing a new channel or communicating with other devices on the new channel, while the new channel managing device communicates on the master channel managed by the network management device (S807); and
receiving the branch beacon and transmitting the channel information on the new channel.

5. The method of claim 4, wherein the new channel is assigned according to a request of at least one device on the master channel to use the new channel, or a result of determining a status of the master channel of the network management device.

6. The method of claim 4, wherein the branch beacon comprises at least one of a channel number of the master channel, a point of time when a beacon is transmitted on the master channel, a group of channels to be switched when a primary user suddenly appears, and resource distribution information of the new channel.

## Patentansprüche

1. Verfahren zum Managen mehrerer Kanäle in einem einzelnen Netzwerk eines kognitiven Funksystems, wobei das durch eine Netzwerkmanagementvorrichtung durchgeführte Verfahren einen Master-Kanal managt und eine Steuerung und ein Management des Master-Kanals durch Übertragen eines Master-Beacons zum Master-Kanal durchführt, und umfasst:
Bestimmen eines neuen Kanals und wenigstens einer auf dem neuen Kanal zu betreibenden Vorrichtung (S701);
Bestimmen, ob ein direktes Management für den neuen Kanal anzuwenden ist (S702);
im Fall eines direkten Managements,
Schalten eines Betriebskanals vom Master-Kanal zum neuen Kanal, Erzeugen eines Verzweigungs-Beacons zum Durchführen einer Steuerung und eines Managements des neuen Kanals und Übertragen des Verzweigungs-Beacons auf den neuen Kanal (S703);
Empfangen von Kanalinformation von Vorrichtungen auf dem neuen Kanal, die den Verzweigungs-Beacon empfingen (S704); und
Schalten des Betriebskanals zurück zum Master-Kanal und Übertragen des Master-Beacons (S705);
im Fall keines direkten Managements,
Bestimmen von einer von der wenigstens einen auf dem neuen Kanal zu betreibenden Vorrichtung als eine den neuen Kanal managende Vorrichtung (S706); und
Empfangen von neuer Kanalinformation von der den neuen Kanal managenden Vorrichtung, die den auf dem Master-Kanal nach einem Schalten des Betriebskanals vom neuen Kanal zum Master-Kanal übertragenen Master-Beacon empfing (S707).

2. Verfahren nach Anspruch 1, wobei die wenigstens eine auf dem neuen Kanal zu betreibende Vorrichtung gemäß einer Anfrage der auf dem neuen Kanal zu betreibenden entsprechenden Vorrichtung oder einem Status des Master-Kanals bestimmt wird (S701).

3. Verfahren nach Anspruch 1, wobei der Verzweigungs-Beacon wenigstens eines von einer Kanalnummer des Master-Kanals, einem Zeitpunkt, wenn ein Beacon auf dem Master-Kanal übertragen wird, einer Gruppe von zu schaltenden Kanälen, wenn ein primärer Nutzer plötzlich erscheint, und Ressourcenverteilungsinformation des neuen Kanals umfasst.

4. Verfahren zum Managen mehrerer Kanäle in einem einzelnen Netzwerk eines kognitiven Funksystems, wobei das Verfahren durch eine Netzwerkvorrichtung durchgeführt wird und umfasst:
Zuordnen zur Netzwerkvorrichtung eines neuen Kanals und Schalten eines Betriebskanals zum neuen Kanal (S801);
Bilden eines Verzweigungsnetzwerks auf dem neuen Kanal mit anderen Vorrichtungen, um auf dem neuen Kanal zu arbeiten, und Bestimmen, ob sie selbst als eine den neuen Kanal managende Vorrichtung ausgewählt ist (S802);
im Fall, dass die Netzwerkvorrichtung als die den neuen Kanal managende Vorrichtung ausgewählt ist,
Empfangen eines Master-Beacons, der auf einem Master-Kanal übertragen ist, der durch eine Netzwerkmanagementvorrichtung gemanagt wird, und Übertragen neuer Kanalinformation (S804) nach einem Schalten des Betriebskanals vom neuen Kanal zum Master-Kanal (S803) gemäß einer Autorität, um den neuen Kanal zu managen, bewilligt durch die Netzwerkmanagementvorrichtung; und
Übertragen eines Verzweigungs-Beacons zum Durchführen einer Steuerung und eines Managements des neuen Kanals auf dem neuen Kanal und Empfangen von Kanalinformation von wenigstens einer Vorrichtung auf dem neuen Kanal (S806) nach einem Schalten des Betriebskanals vom Master-Kanal zum neuen Kanal (S805);
im Fall, dass die Netzwerkvorrichtung nicht als die den neuen Kanal managende Vorrichtung ausgewählt ist,
Erfassen eines neuen Kanals oder Kommunizieren mit anderen Vorrichtungen auf dem neuen Kanal, während die den neuen Kanal managende Vorrichtung auf dem durch die Netzwerkmanagementvorrichtung gemangten Master-Kanal kommuniziert (S807); und
Empfangen des Verzweigungs-Beacons und Übertragen der Kanalinformation auf dem neuen Kanal.

5. Verfahren nach Anspruch 4, wobei der neue Kanal gemäß einer Anfrage wenigstens einer Vorrichtung auf dem Master-Kanal zugeordnet wird, den neuen Kanal zu verwenden, oder einem Ergebnis eines Bestimmens eines Status des Master-Kanals der Netzwerkmanagementvorrichtung.

6. Verfahren nach Anspruch 4, wobei der Verzweigungs-Beacon wenigstens eines von einer Kanalnummer des Master-Kanals, einem Zeitpunkt, wenn ein Beacon auf dem Master-Kanal übertragen wird, einer Gruppe von zu schaltenden Kanälen, wenn ein primärer Nutzer plötzlich erscheint, und Ressourcenverteilungsinformation des neuen Kanals umfasst.

## Revendications

1. Procédé de gestion de canaux multiples dans un réseau unique d'un système de radio cognitive, le procédé réalisé par un dispositif de gestion de réseau gérant un canal maître et réalisant une commande et une gestion du canal maître en transmettant une balise maître au canal maître, et comprenant :
la détermination d'un nouveau canal et d'au moins un dispositif à exploiter sur le nouveau canal (S701) ;
le fait de déterminer s'il faut appliquer une gestion directe pour le nouveau canal (S702) ;
en cas de gestion directe,
la commutation d'un canal d'exploitation du canal maître au nouveau canal, la génération d'une balise de dérivation pour réaliser une commande et une gestion du nouveau canal, et la transmission de la balise de dérivation sur le nouveau canal (S703) ;
la réception d'informations de canal en provenance de dispositifs sur le nouveau canal qui a reçu la balise de dérivation (S704) ; et
la commutation du canal d'exploitation de retour au canal maître, et la transmission de la balise maître (S705) ;
en cas d'absence de gestion directe,
la détermination de l'un parmi l'au moins un dispositif à exploiter sur le nouveau canal en tant que dispositif de gestion de nouveau canal (S706) ; et
la réception d'informations de nouveau canal en provenance du dispositif de gestion de nouveau canal qui a reçu la balise maître transmise sur le canal maître après commutation du canal d'exploitation du nouveau canal au canal maître (S707).

2. Procédé selon la revendication 1, dans lequel l'au moins un dispositif à exploiter sur le nouveau canal est déterminé (S701) selon une demande du dispositif correspondant à exploiter sur le nouveau canal ou un statut du canal maître.

3. Procédé selon la revendication 1, dans lequel la balise de dérivation comprend au moins l'un parmi un nombre de canaux du canal maître, un instant où une balise est transmise sur le canal maître, un groupe de canaux à commuter lorsqu'un utilisateur principal apparaît soudainement, et des informations de distribution de ressources du nouveau canal.

4. Procédé de gestion de canaux multiples dans un réseau unique d'un système de radio cognitive, le procédé étant réalisé par un dispositif de réseau et comprenant :
l'attribution au dispositif de réseau d'un nouveau canal, et la commutation d'un canal d'exploitation au nouveau canal (S801) ;
la formation d'un réseau de dérivation sur le nouveau canal avec d'autres dispositifs à exploiter sur le nouveau canal, et le fait de déterminer si celui-ci est sélectionné en tant que dispositif de gestion de nouveau canal (S802) ;
dans le cas où le dispositif de réseau est sélectionné en tant que dispositif de gestion de nouveau canal,
la réception d'une balise maître transmise sur un canal maître qui est géré par un dispositif de gestion de réseau et la transmission d'informations de nouveau canal (S804) après commutation du canal d'exploitation du nouveau canal au canal maître (S803), selon une autorité pour gérer le nouveau canal accordée par le dispositif de gestion de réseau ; et
la transmission d'une balise de dérivation pour réaliser une commande et une gestion du nouveau canal sur le nouveau canal et la réception d'informations de canal en provenance d'au moins un dispositif sur le nouveau canal (S806) après commutation du canal d'exploitation du canal maître au nouveau canal (S805) ;
dans le cas où le dispositif de réseau n'est pas sélectionné en tant que dispositif de gestion de nouveau canal,
la détection d'un nouveau canal ou la communication avec d'autres dispositifs sur le nouveau canal, tandis que le dispositif de gestion de nouveau canal communique sur le canal maître géré par le dispositif de gestion de réseau (S807) ; et
la réception de la balise de dérivation et la transmission des informations de canal sur le nouveau canal.

5. Procédé selon la revendication 4, dans lequel le nouveau canal est attribué selon une demande d'au moins un dispositif sur le canal maître d'utiliser le nouveau canal, ou un résultat de détermination d'un statut du canal maître du dispositif de gestion de réseau.

6. Procédé selon la revendication 4, dans lequel la balise de dérivation comprend au moins l'un parmi un nombre de canaux du canal maître, un instant où une balise est transmise sur le canal maître, un groupe de canaux à commuter lorsqu'un utilisateur principal apparaît soudainement, et des informations de distribution de ressources du nouveau canal.
